Europäisches Patentamt

European Patent Office

Office européen des brevets

(11) Numéro de publication: **0 490 206 B1**

(12) **FASCICULE DE BREVET EUROPEEN**

(45) Date de publication du fascicule du brevet: **27.09.95**  (51) Int. Cl.⁶: **G01D 5/36**

(21) Numéro de dépôt: **91120639.9**

(22) Date de dépôt: **30.11.91**

(54) **Capteur de position pour un appareil de mesure de grandeurs linéaires ou angulaires.**

(30) Priorité: **10.12.90 CH 3892/90**

(43) Date de publication de la demande:
**17.06.92 Bulletin 92/25**

(45) Mention de la délivrance du brevet:
**27.09.95 Bulletin 95/39**

(84) Etats contractants désignés:
**AT DE ES FR GB**

(56) Documents cités:
**EP-A- 0 165 392**
**EP-A- 0 268 558**
**DE-A- 3 818 044**

**PATENT ABSTRACTS OF JAPAN vol. 9, no. 276 (P-402)(1999) 2 Novembre 1985 ; & JP-A-60 120 216**

(73) Titulaire: **TESA S.A.**
**Rue Bugnon 38**
**CH-1020 Renens (CH)**

(72) Inventeur: **Durana, Miroslav**
**Chemin de la Cassinette 11**
**CH-1018 Lausanne (CH)**
Inventeur: **Gallay, Roland**
**"Au Village"**
**CH-1726 Farvagny-le-Petit (CH)**
Inventeur: **Robert, Philippe**
**Ch. de la Biolleyre 3**
**CH-1066 Epalinges (CH)**

(74) Mandataire: **Misrachi, Alfred**
**15, Ch. de la Plantaz**
**CH-1024 Ecublens (CH)**

Rank Xerox (UK) Business Services
(3.10/3.09/3.3.3)

## Description

La présente invention a pour objet un capteur de position pour un appareil de mesure de grandeurs linéaires ou angulaires comprenant une unité de captage et une règle ou un disque pourvus de graduations dont les déplacements relatifs sont captés par un dispositif de détection associé à l'unité de captage pour produire, par suite du défilement des graduations de la règle ou du disque, des signaux électriques représentatifs de la valeur desdits déplacements relatifs et des moyens pour obtenir une indication de position absolue avec la résolution des systèmes incrémentaux sans nécessiter de calage par un déplacement des organes mobiles.

On connaît un capteur de position pour un appareil de mesure de grandeurs linéaires comprenant une unité de captage et une règle graduée en matériau transparent et à graduation contrastée composée de barres parallèles alternativement transparentes et opaques ou réfléchissantes dont les déplacements relatifs sont captés par un dispositif de détection optoélectronique comportant des moyens photoémetteurs, photodétecteurs et optiques associés à l'unité de captage et arrangés pour produire, par variations de l'irradiation des moyens photodétecteurs générées par le défilement de la graduation de la règle, les signaux électriques représentatifs de la valeur desdits déplacements relatifs.

Ce capteur, qui a fait l'objet d'applications industrielles, par exemple et notamment dans les appareils utilisés pour la mesure et le contrôle dimensionnel de pièces mécaniques, comporte une règle à graduation incrémentale et un réticule de palpage à graduation complémentaire associé à l'unité de palpage. Le réticule est placé entre la règle et les moyens photodétecteurs pour produire sur ces derniers et sous l'effet de l'irradiation des moyens photoémetteurs, des contrastes lumineux alternés générateurs de signaux alternatifs sinusoïdaux fonction de la valeur des déplacements relatifs de la règle et de l'unité de palpage, cette dernière étant par exemple associée à un curseur mobile le long de la règle.

Afin d'obtenir une définition très fine de la mesure, l'unité de palpage est équipée, dans la plupart de ces appareils de mesure, d'un groupe de quatre photodétecteurs déphasés de 90° électriques pour produire des signaux en quadrature et permettre une interpolation de ceux-ci à l'intérieur de chaque pas de la graduation incrémentale de la règle.

Ce système de détection procure les avantages de la rapidité et d'une définition très fine de la mesure, le rapport quantitatif de ces deux qualités pouvant être modulé par le choix du facteur de multiplication de l'interpolation.

Il présente cependant un inconvénient inhérent au fait qu'il ne donne qu'une mesure relative fonction du nombre de pas de la graduation incrémentale parcourus pendant un déplacement. De ce fait, à chaque perte de signal causée par une interruption, volontaire ou accidentelle, de l'alimentation électrique du capteur, la mesure est perdue et l'opérateur doit reprendre au moins en partie sinon dans leur totalité les opérations de prise de mesure.

Il est donc toujours nécessaire d'effectuer un calage sur repères à l'enclenchement ou au réenclenchement, ce qui est une perte de temps; en outre, les déplacements de la règle ou du curseur, peuvent engendrer des risques d'usure ou même de casse lorsque des outils sont engagés ou bien lorsque des difficultés d'accès causent une gêne pour recalibrer sur les repères.

Un capteur de position absolue utilisant des moyens optoélectroniques et ne souffrant pas des conséquences d'une interruption accidentelle d'alimentation est décrit dans le document GB-A-2126444.

Dans ce capteur, la règle présente une graduation constituée par une distribution pseudo-aléatoire de barres parallèles et d'espacements de même largeur constituant des bits de codage binaire, formant une suite continue de mots. Ces mots sont lus par un photodétecteur comportant un réseau de diodes en nombre suffisant pour pouvoir lire simultanément plusieurs bits de la séquence pseudo-aléatoire, afin d'identifier la position le long de la règle.

Le réseau du photodétecteur comporte plusieurs diodes pour chaque bit de la graduation pseudo-aléatoire, de sorte que la position absolue des transitions ou des barres de la graduation pseudo-aléatoire peut être mesurée à l'intérieur de la longueur d'un bit.

De ce fait, l'incrément de mesure de ce capteur de position absolue est égal, dans les meilleures conditions de lecture, au pas du réseau de diodes du photodétecteur.

Une combinaison a été proposée pour obtenir la lecture d'une position absolue, dans laquelle la règle comporte une graduation composite constituée par une superposition d'une graduation absolue constituée par une distribution pseudo-aléatoire de barres parallèles et d'espacements de même largeur constituant des bits de codage binaire formant une suite continue de mots, et d'une graduation incrémentale dont les barres sont inscrites dans les bits transparents de la séquence pseudo-aléatoire, le pas incrémental devant ainsi être sensiblement plus petit que la largeur d'un bit de la séquence pseudo-aléatoire. Cette graduation composite est lue par une unité de captage comportant un détecteur à transfert de charges (CCD) pour lire la graduation pseudo-aléatoire et un ensemble conventionnel de quatre photodétecteurs déphasés de 90° électriques pour lire la graduation incrémentale présente dans les bits transparents de la séquence pseudo-aléatoire.

Il résulte de cet arrangement, et dans le meilleur choix du rapport des pas des deux graduations, une perte de luminosité de la graduation incrémentale, due à la graduation pseudo-aléatoire, qui est voisine de 50%.

L'interpolation nécessaire à la détermination de la mesure fine à l'intérieur d'un pas de la graduation incrémentale ne peut se faire que grâce à la graduation présente dans les bits transparents de la séquence pseudo-aléatoire, ce qui entraîne une incertitude sur la position effective du pas de la graduation incrémentale correspondant à la position cherchée. En outre, comme ce système ne peut fonctionner que pour un pas de la graduation incrémentale plus petit que la largeur d'un bit de la graduation pseudo-aléatoire, cela entraîne la nécessité d'un déplacement règle/curseur pouvant atteindre la largeur d'un bit de la graduation pseudo-aléatoire pour recalage en cas de perte du signal.

Une autre combinaison est décrite dans le document EP-A-0268 558, dans laquelle l'élément gradué comporte une piste incrémentale bordée de chaque côté d'une piste portant des motifs permettant une détermination grossière de la position absolue. Le codage sur ces pistes latérales se fait à deux niveaux, par le motif lui-même qui est d'un genre code-barres, et par le décalage de la position de ces motifs sur les deux pistes latérales. Cet agencement ne peut fonctionner qu'avec un déplacement, et il en résulte qu'un recalage à l'enclenchement ou après une perturbation est nécessaire, même si ce recalage est relativement réduit.

Le document DE-A-3818044 décrit une combinaison dans laquelle une piste incrémentale est complétée par des marques de références disposées à intervalles réguliers, jouant le rôle de points d'étalonnage de la position absolue. Ces marques peuvent être lues sans déplacement car il est prévu l'utilisation de plusieurs CCD de manière à garantir que l'un au moins de ces CCD est en mesure de lire une marque de référence sans déplacement. Les marques sont identifiées par une succession de deux bits identiques pour permettre le décodage et la position absolue de la marque est exprimée par m bits, dans un code usuel (code binaire, code de Gray, etc), les bits étant inscrits en surimpression sur la piste incrémentale. Le système fonctionne ainsi grâce à des marques d'étalonnage disposées de proche en proche (points d'étalonnage discrets, séparés par des tronçons dépourvus de marques d'étalonnage), ce qui se traduit par une réalisation lourde et peu performante car la piste incrémentale est lue avec les mêmes CCD que ceux utilisés pour décoder les marques de référence.

L'invention a pour but de permettre une mesure de position absolue bénéficiant des avantages de la rapidité et de la définition fine d'une mesure par le procédé incrémental sans toutefois en présenter les contraintes et inconvénients précités, en particulier la perte de la position absolue et la nécessité de recalage par déplacements plus ou moins importants.

A cet effet, le capteur selon l'invention est conforme à la définition donnée par les revendications.

De la sorte, par effet de la séparation en deux pistes parallèles ou concentriques des graduations absolue et incrémentale sur la règle ainsi que de leurs lectures par l'unité de captage, les inconvénients et contraintes générés par leur surimpression et leurs lectures simultanées sont supprimés. Il n'y a plus en effet de perte de luminosité de la graduation incrémentale ni d'interruption de la continuité de celle-ci, et la contrainte relative au rapport du pas de cette graduation avec la largeur d'un bit de la graduation absolue est supprimée, ce qui permet de moduler ce rapport en fonction des caractéristiques des composants optoélectroniques offerts sur le marché et au vu de la précision et de la fiabilité recherchées. En outre, la nécessité d'un déplacement règle/curseur pour recalage a l'enclenchement ou en cas de perte du signal, par exemple par panne d'alimentation, disparaît. Des données de détails, porteuses d'effets supplémentaires avantageux, ressortiront de la description qui suit.

Le dessin annexé représente, à titre d'exemple, une forme d'exécution de l'objet de l'invention.

La figure 1 en est une vue d'ensemble schématique en coupe transversale.

La figure 2 est une vue de dessus de la règle.

La figure 3 est une vue partielle de la graduation de la règle.

La figure 4 est une vue de côté schématique partielle de l'ensemble de la figure 1.

Le capteur de position représenté comporte une règle transparente 2, par exemple en verre optique, et une unité de captage 3 montée dans un curseur 30 mobile par translation le long de cette règle ou inversement selon l'appareil de mesure auquel ce capteur est associé.

La règle 2 comporte deux pistes graduées parallèles 4 et 5 dont les graduations sont composées de barres opaques parallèles 40 et 50 distribuées perpendiculairement à sa direction longitudinale.

Les barres opaques 40 et 50 sont réalisées par exemple selon un procédé de gravage d'une couche de chrome 6 déposée sur le verre optique de la règle.

L'une des deux pistes, la piste 5, est dite incrémentale; elle présente une distribution de barres 50 équidistantes, de pas P, dans laquelle les barres et les espacements sont de même largeur $P/_2$.

L'autre piste, la piste 4, est dite absolue; elle présente une distribution pseudo-aléatoire de barres 40 et d'espacements de même largeur L constituant des bits de codage binaire, 1-0, formant une suite continue de mots tous différents les uns des autres.

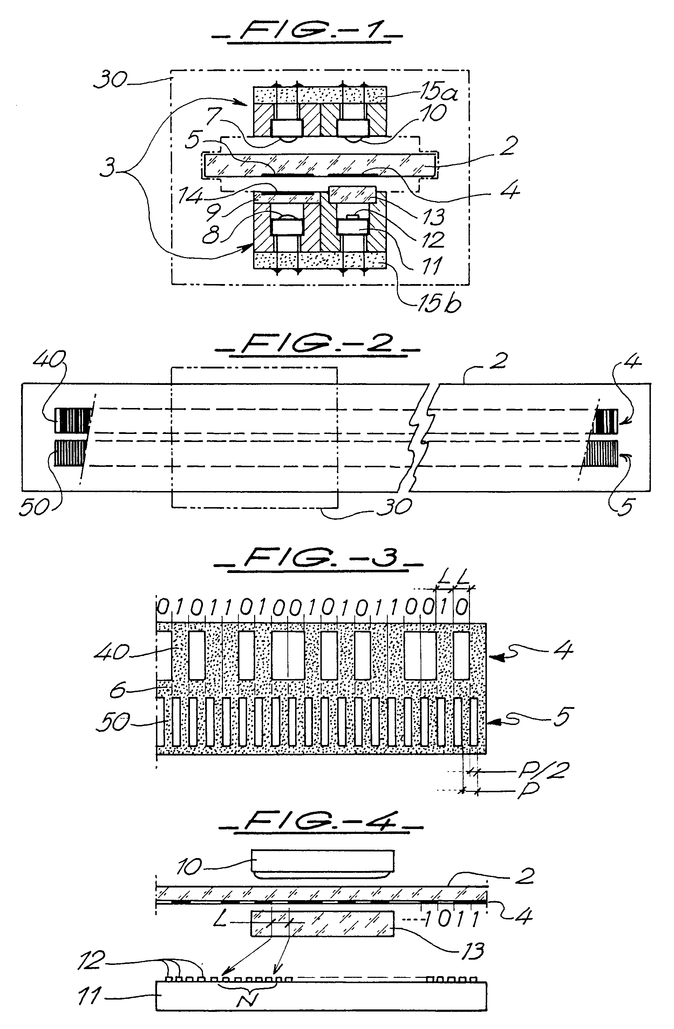

Dans le but de faciliter la conception de la règle à deux pistes et de simplifier l'algorithme de calcul de la valeur absolue de la position atteinte, quelle que soit celle-ci, le pas P de la graduation incrémentale est un multiple ou un sous-multiple de la largeur L des barres et espacements de la graduation absolue, comme sur la figure 3 ou l'on a représenté le cas P = L.

L'unité de palpage 3, figure 1, comporte :
- d'une part en regard de la piste incrémentale 5 de la règle 2, et de part et d'autre de celle-ci, un photoémetteur 7 et un groupe de quatre photodétecteurs 8, dont un seul est visible ici, déphasés de 90° électriques, disposés l'un derrière l'autre le long de cette piste, pour produire des signaux en quadrature, un réticule 9 de palpage de la graduation de cette piste incrémentale étant placé entre la règle 2 et les photorécepteurs 8,
- et d'autre part en regard de la piste absolue 4 de la règle 2 et de part et d'autre de celle-ci également, un photoémetteur 10 et un détecteur à transfert de charges CCD de type linéaire 11, présentant une pluralité de photodiodes 12, une lentille optique 13 étant ici placée entre la règle 2 et le détecteur CCD.

Dans cet arrangement, le réticule 9 de palpage de la graduation de la piste incrémentale 5 présente une graduation 14 semblable à cette dernière, de même pas ou de pas proportionnel, établie pour produire, sous l'effet de l'irradiation des photodétecteurs 8 et au travers de ces graduations, des signaux électriques alternatifs fonction de la grandeur des déplacements relatifs de la règle 2 et de l'unité de palpage 3 à laquelle ce réticule est fixé.

Les quatre photodétecteurs 8 arrangés pour produire des signaux en quadrature permettent d'effectuer une interpolation de ces signaux à l'intérieur de chaque pas P de la piste incrémentale 5, en vue d'obtenir une mesure fine de la position atteinte. Il est toutefois possible de ne faire usage que de deux photodétecteurs déphasés.

Le détecteur 11 à transfert de charges CCD de type linéaire est arrangé pour lire au minimum un mot complet formé par un nombre défini de bits 1-0 successifs de la piste absolue 4, de manière à permettre l'identification du mot de la séquence pseudo-aléatoire correspondant aux bits de poids fort du code représentant la position absolue atteinte.

La lentille optique 13, est ici associée au système de détection de la piste absolue pour obtenir un rendement optique optimal et accroître si nécessaire la résolution.

Cette lentille 13, dont l'agencement dans la direction longitudinale de la règle 2 est montré par la figure 4, est d'un type approprié pour produire un allongement optique de l'image permettant de recueillir au minimum la longueur d'un mot de la piste absolue 4 sur toute l'étendue du détecteur CCD 11. De préférence, le facteur d'allongement optique de cette lentille 13 sera choisi pour étendre l'image d'un bit, de longueur L de la piste absolue 4, sur un nombre N égal ou supérieur à trois photodiodes 12 du détecteur CCD, nombre qui est ici de cinq sur le dessin, et ceci dans le but d'obtenir une uniformité dans le degré d'éclairement de la photodiode centrale de la série de photodiodes ainsi influencées par chaque bit de même nature, quel que soit son environnement formé par les autres bits du mot lu à identifier.

Les éléments optoélectroniques de l'unité de captage peuvent être choisis préférentiellement en technique infrarouge, les photoémetteurs 7 et 10 étant par exemple constitués par des diodes émettrices IR, les photorécepteurs 8 par des photodétecteurs IR et les photodiodes 12 du CCD également par des photodétecteurs IR, ceci pour l'avantage de leur faible consommation en énergie électrique, pour le bon rendement quantique et pour leur bonne adaptation à des vitesses d'analyse rapides, mais il est bien évident que ce choix n'est pas limitatif.

Les photoémetteurs 7 et 10, les photorécepteurs 8 et le détecteur CCD 11 sont reliés à deux circuits imprimés 15a et 15b d'alimentation de ces éléments et de traitement des signaux générés par les photorécepteurs et le CCD.

Le traitement des signaux est effectué par un circuit électronique, non représenté, comprenant des moyens de décodage des signaux résultant de la lecture de la graduation pseudo-aléatoire de la piste absolue 4 par le détecteur CCD 11 pour permettre la détermination des bits de poids fort, des moyens d'interpolation des signaux en quadrature résultant de la lecture de la piste incrémentale 5 par les photodétecteurs 8 pour la détermination des bits de poids faible à l'intérieur d'un pas de cette graduation, et des moyens de combinaison des résultats issus de la lecture des deux pistes afin de pouvoir obtenir à chaque instant et sans aucune opération de recalage en cas de panne, défaut d'alimentation ou toute autre perturbation provoquant une perte momentanée du signal, la position absolue avec la résolution propre à la piste incrémentale et son système de lecture et de décodage.

Les moyens permettant de décoder les signaux provenant de la piste absolue peuvent être constitués par exemple, par un circuit comprenant un comparateur pour comparer les signaux du détecteur CCD avec les séquences binaires pseudo-aléatoires générées par un registre à décalage, et un compteur déterminant le nombre de cycles du registre à décalage nécessaires pour aboutir à l'identité des séquences pseudo-aléatoires lues sur le détecteur d'une part et produites par le registre à décalage d'autre part.

Ces moyens peuvent également consister en mémoires programmées pour effectuer directement la traduction de la séquence pseudo-aléatoire en position absolue.

Les moyens permettant la détermination de la position a l'intérieur d'un pas de la piste incrémentale 5 peuvent être constitués, par exemple, par un calculateur à l'aide duquel la position angulaire statique à l'instant considéré est calculée en résolvant l'équation du vecteur tournant déterminé par le sinus d'un des signaux en quadrature et par le cosinus de l'autre. Ensuite le calculateur détermine le nombre d'incréments de mesure en divisant la valeur de l'angle calculé par la grandeur de l'angle d'un incrément de l'interpolation. La précision de cette détermination est dépendante du facteur de multiplication choisi. Ainsi, par exemple, pour un facteur de multiplication de 200 et un pas P de la piste incrémentale de 20 $\mu$, la résolution d'un incrément de l'interpolation correspond à :

$$360°/200 = 1,8° \text{ et vaut } 0,1 \mu.$$

Dans le cas où le calcul de la position angulaire serait par exemple de 75°, le nombre d'incréments équivaudrait à une mesure de :

$$(75°/1,8°)0,1 \mu = 4,16 \mu.$$

La synthèse des résultats obtenus par la lecture des deux pistes parallèles peut être effectuée par un circuit comportant, par exemple, un registre dans lequel les bits de poids fort proviennent de la lecture de la piste absolue et les bits de poids faible de la lecture de la piste incrémentale.

Selon une variante, il est prévu de remplacer les systèmes optiques décrits par des systèmes électro-magnétiques dans lesquels les graduations dites incrémentale et absolue des deux pistes de la règle seront matérialisées par des zones polarisées magnétiquement dans des directions différentes, l'unité de palpage étant alors équipée de détecteurs électro-magnétiques aptes à lire ces graduations pour produire les signaux requis.

Selon une autre variante, le capteur de position selon l'invention est prévu pour un appareil de mesure de grandeurs angulaires. Dans ce cas, le capteur diffère de la version linéaire en ce sens que la règle se présente sous la forme d'un disque comportant deux pistes graduées concentriques dont l'une, dite incrémentale, présente une alternance régulière de secteurs optiquement opaques ou réfléchissants séparés par des espacements transparents de même angle que ces secteurs opaques ou réfléchissants, l'ensemble d'un secteur et d'un espacement formant un motif de pas angulaire P se répétant régulièrement, et dont l'autre, dite absolue, présente une distribution pseudo-aléatoire de secteurs optiquement opaques ou réfléchissants et d'espacements transparents de même angle constituant des bits de codage binaire formant une suite continue de mots tous différents les uns des autres, et l'angle d'un bit étant fonction du pas de la graduation de la piste incrémentale. Dans ce cas également, les systèmes optiques pourront être remplacés par des systèmes électro-magnétiques.

## Revendications

1. Capteur de position pour un appareil de mesure de grandeurs linéaires ou angulaires comprenant une unité de captage et une règle ou un disque pourvus de graduations dont les déplacements relatifs sont captés par un dispositif de détection associé à l'unité de captage pour produire, par suite du défilement des graduations de la règle ou du disque, des signaux électriques représentatifs de la valeur desdits déplacements relatifs, et des moyens pour obtenir une indication de position absolue avec la résolution des systèmes incrémentaux sans nécessiter de calage par un déplacement des organes mobiles, caractérisé en ce que la règle ou le disque comporte deux pistes graduées parallèles ou concentriques dont l'une, dite incrémentale, présente une alternance régulière de barres parallèles ou de secteurs séparés par des espacements de même largeur que ces barres ou de même angle que ces secteurs, l'ensemble d'une barre et d'un espacement ou d'un secteur et d'un espacement formant un motif de pas P se répétant régulièrement, et dont l'autre, dite absolue, présente une distribution pseudo-aléatoire de barres parallèles et d'espacements de même largeur L ou de secteurs et d'espacements de même angle, constituant des bits de codage binaire formant une suite continue de mots tous différents les uns des autres, la largeur ou l'angle d'un bit étant fonction du pas de la graduation de la piste incrémentale, et en ce que l'unité de captage comporte, d'une part en regard de la piste incrémentale, un dispositif détecteur apte à lire sa graduation pour produire des signaux en quadrature et permettre une interpolation de ceux-ci à l'intérieur de chaque pas P de la graduation de cette piste, et d'autre part en regard de la piste absolue, un dispositif détecteur apte à lire au minimum un mot complet formé d'un nombre défini de bits successifs de cette piste, des moyens assurant la combinaison des informations extraites des deux pistes de la règle ou du disque.

2. Capteur selon la revendication 1, caractérisé en ce que la largeur L ou l'angle d'un bit de la graduation de la piste absolue est égale au pas P de la graduation de la piste incrémentale.

3. Capteur selon la revendication 1, caractérisé en ce que les barres parallèles ou les secteurs sont opaques ou réfléchissants, en ce que les espacements sont transparents, en ce que l'unité de captage comporte en regard de la piste incrémentale un photoémetteur, un réticule gradué de palpage de la graduation de cette piste, et au moins deux photodétecteurs décalés de 90° électriques, et en regard de la piste absolue un photoémetteur, un détecteur à transfert de charges CCD de type linéaire présentant une pluralité de photodiodes ou un détecteur angulaire présentant une pluralité de photodiodes, les sorties des deux photodétecteurs et du CCD ou du détecteur angulaire étant reliées à un circuit électronique de traitement, de décodage, et d'identification des signaux générés et assurant la combinaison des informations extraites des deux pistes de la règle ou du disque.

4. Capteur selon la revendication 3, caractérisé en ce que l'unité de captage comporte, disposée entre la piste absolue et le détecteur CCD ou le détecteur angulaire, une lentille optique apte à produire un allongement optique de l'image permettant de recueillir au minimum la longueur d'un mot de cette piste sur toute l'étendue du CCD ou sur le secteur actif du détecteur angulaire.

5. Capteur selon la revendication 4, caractérisé en ce que la lentille a un facteur d'allongement optique choisi pour étendre l'image d'un bit de la graduation de la piste absolue sur un nombre N égal ou supérieur à trois photodiodes du détecteur CCD ou du détecteur angulaire.

6. Capteur selon la revendication 1, caractérisé en ce que les barres parallèles ou les secteurs et les espacements de la piste incrémentale et ceux de la piste absolue sont constitués par des alternances de zones polarisées magnétiquement dans des directions différentes.

## Claims

1. Position sensor for an apparatus for measuring linear or angular variables comprising a sensing unit and a rule or disc provided with graduations of which the relative displacements are detected by a detection device associated with the sensing unit to produce, owing to the travel of the graduations of the rule or disc, electric signals representative of the value of said relative displacements, and means for obtaining an indication of absolute position with the resolution of incremental systems without a need for adjustment by a displacement of the moving parts, characterised in that the rule or the disc comprises two parallel or concentric graduated tracks of which one, the so-called incremental track, has a regular alternation of parallel bars or sectors separated by spaces having the same width as these bars or the same angle as these sectors, the unit of one bar and one space or one sector and one space forming a regularly repeated pattern of pitch P, and of which the other, so-called absolute track, has a pseudo-random distribution of parallel bars and spaces of the same width L or of sectors and spaces of the same angle, constituting binary coding bits forming a continuous succession of words which are all different from one another, the width or the angle of a bit depending on the pitch of the graduation of the incremental track, and in that the sensing unit comprises, on the one hand facing the incremental track, a detecting device capable of reading its graduation so as to produce signals in quadrature and allow interpolation thereof inside each pitch P of the graduation of this track and, on the other hand, facing the absolute track, a detecting device capable of reading a minimum of one complete word formed by a defined number of successive bits of this track, means allowing the combination of the information extracted from the two tracks of the rule or of the disc.

2. Sensor according to claim 1, characterised in that the width L or the angle of one bit of the graduation of the absolute track is equal to the pitch P of the graduation of the incremental track.

3. Sensor according to claim 1, characterised in that the parallel bars or the sectors are opaque or reflective, in that the spaces are transparent, in that the sensing unit comprises a photo-electric emitter, a graduated reticule for tracing the graduation of this track, and at least two electric light detectors offset by 90° facing the incremental track and a photoelectric emitter, a linear-type CCD charge transfer detector having a plurality of photodiodes and an angular detector having a plurality of photodiodes facing the absolute track, the outputs of the two light detectors and of the CCD or of the angular detector being connected to an electronic circuit for the processing, decoding and identification of the generated signals and allowing the combination of the information extracted from the two tracks of the rule or of the disc.

4. Sensor according to claim 3, characterised in that the sensing unit comprises, arranged between the absolute track and the CCD detector or the angular detector, an optical lens capable of producing an optical elongation of the image allowing, at a minimum, the length of one word of this track to be collected over the entire range of the CCD or over the active sector of the angular detector.

5. Sensor according to claim 4, characterised in that the lens has an optical elongation factor selected so as to extend the image of one bit of the graduation of the absolute track over a number N equal to or greater than three photodiodes of the CCD detector or angular detector.

6. Sensor according to claim 1, characterised in that the parallel bars or the sectors and the spaces of the incremental track and those of the absolute track consist of alternations of zones magnetically polarised in different directions.

**Patentansprüche**

1. Positionsaufnehmer für ein Linear- oder Winkelmeßgerät, welcher eine Aufnahmeeinheit und eine mit einer Rasterung versehene Meßschiene oder Meßscheibe umfaßt, deren relative Verschiebungen zueinander von einer Erfassungsvorrichtung aufgenommen werden, die der Aufnahmeeinheit zugeordnet ist, um infolge des Durchlaufs der Rasterungen der Meßschiene oder der Meßscheibe elektrische Signale zu erzeugen, welche den Wert der genannten relativen Verschiebungen repräsentieren, und welcher Mittel zum Erhalten einer absoluten Positionsanzeige mit der Auflösung von Inkremental-Systemen ohne die Notwendigkeit der Referenzpunktfixierung durch Verschieben der beweglichen Teile umfaßt,

**dadurch gekennzeichnet**, daß die Meßschiene oder die Meßscheibe zwei gerasterte, parallele oder konzentrische Meßstreifen umfaßt, von denen einer, genannt der inkrementale Meßstreifen, eine regelmäßige Wechselfolge von parallelen Balken oder von Sektoren aufweist, die durch Zwischenräume der gleichen Breite wie die Balken oder der gleichen Winkelausdehnung wie die Sektoren getrennt sind, wobei die Gesamtheit eines Balkens und eines Zwischenraums oder eines Sektors und eines Zwischenraums eine sich regelmäßig wiederholende Schrittweite P bildet, und von denen der andere, genannt der absolute Meßstreifen, eine pseudozufällige Verteilung von parallelen Balken und Zwischenräumen der gleichen Breite L oder von Sektoren und Zwischenräumen der gleichen Winkelausdehnung aufweist, welche Bits einer binären Codierung darstellen und eine kontinuierliche Folge von Datenworten bilden, die alle voneinander verschieden sind, wobei die Breite oder die Winkelausdehnung eines Bits von der Schrittweite der Rasterung des inkrementalen Meßstreifens abhängt, und daß die Aufnahmeeinheit einerseits gegenüber dem inkrementalen Meßstreifen eine Erfassungsvorrichtung umfaßt, die zum Lesen der Rasterung dieses Meßstreifens zum Erzeugen phasenverschobener Signale geeignet ist und eine Interpolation dieser Signale innerhalb jeder Schrittweite P der Rasterung dieses Meßstreifens ermöglicht, andererseits gegenüber dem absoluten Meßstreifen eine Erfassungsvorrichtung umfaßt, die zum Lesen mindestens eines kompletten, sich aus einer festen Anzahl aufeinanderfolgender Bits dieses Meßstreifens zusammensetzenden Datenwortes geeignet ist, und Mittel umfaßt, die die Kombination der den beiden Meßstreifen der Meßschiene oder Meßscheibe entnommenen Informationen sicherstellt.

2. Aufnehmer nach Anspruch 1, **dadurch gekennzeichnet**, daß die Breite L oder die Winkelausdehnung eines Bits der Rasterung des absoluten Meßstreifens gleich der Schrittweite P der Rasterung des inkrementalen Meßstreifens ist.

3. Aufnehmer nach Anspruch 1, **dadurch gekennzeichnet**, daß die parallelen Balken oder die Sektoren lichtundurchlässig oder reflektierend sind, daß die Zwischenräume transparent sind, daß die Aufnahmeeinheit gegenüber dem inkrementalen Meßstreifen eine Photoemissions-Quelle, ein kalibriertes Raster zum Erfassen der Rasterung dieses Meßstreifen und mindestens zwei elektrisch um 90° versetzte Photoempfänger umfaßt und gegenüber dem absoluten Meßstreifen eine Photoemissions-Quelle und einen linearen CCD-Sensor mit einer Vielzahl von Photodioden oder einen Winkelsensor mit einer Vielzahl von Photodioden umfaßt, wobei die Ausgänge der beiden Photoempfänger und des CCD-Sensors oder des Winkelsensors an einen elektronischen Schaltkreis für die Verarbeitung, Dekodierung und Identifikation der erzeugten Signale angeschlossen sind, welcher die Kombination der den beiden Meßstreifen der Meßschiene und der Meßscheibe entnommenen Informationen sicherstellt.

4. Aufnehmer nach Anspruch 3, **dadurch gekennzeichnet**, daß die Aufnahmeeinheit zwischen dem absoluten Meßstreifen und dem CCD-Sensor oder Winkelsensor eine optische Linse zur Erzeugung einer optischen Streckung der Abbildung aufweist, die es ermöglicht, mindestens die Länge eines Datenwortes dieses Meßstreifens über die gesamte Erstreckung des CCD-Sensors oder des aktiven Sektors des Winkeldetektors aufzunehmen.

5. Aufnehmer nach Anspruch 4, **dadurch gekennzeichnet**, daß der optische Streckungsfaktor der Linse derart gewählt ist, daß er die Abbildung eines Bits der Rasterung des absoluten Meßstreifens auf eine Anzahl N von Photodioden des CCD-Sensors oder des Winkelsensors aufweitet, die gleich oder größer drei ist.

6. Aufnehmer nach Anspruch 1, **dadurch gekennzeichnet**, daß die parallelen Balken oder die Sektoren und die Zwischenräume des inkrementalen Meßstreifens sowie die des absoluten Meßstreifens von einer Wechselfolge magnetisch in verschiedenen Richtungen polarisierter Zonen gebildet sind.

_FIG.-1_

_FIG.-2_

_FIG.-3_

_FIG.-4_